(19)

Europäisches
Patentamt
European
Patent Office
Office européen
des brevets

(11) **EP 2 682 895 A2**

(12) **EUROPEAN PATENT APPLICATION**

(43) Date of publication:
**08.01.2014 Bulletin 2014/02**

(51) Int Cl.:
***G06K 9/00*** *(2006.01)*        ***G06T 7/20*** *(2006.01)*

(21) Application number: **13158257.9**

(22) Date of filing: **07.03.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **03.07.2012 JP 2012150024**

(71) Applicant: **Kabushiki Kaisha Toshiba
Tokyo 105-8001 (JP)**

(72) Inventor: **Maruyama, Emi
Tokyo, 105-8001 (JP)**

(74) Representative: **Henkel, Breuer & Partner
Patentanwälte
Maximiliansplatz 21
80333 München (DE)**

(54) **Video display apparatus and video display method**

(57)    A video display apparatus includes an image acquiring module, a face-dictionary face detector, a face determining module and a face tracking module. The image acquiring module is configured to acquire an image captured by an imaging device. The face-dictionary face detector is configured to search the captured image acquired by the image acquiring module for a portion that coincides with a face pattern in a human face dictionary.

The face determining module is configured to evaluate the portion based on the captured image and a background image acquired in advance. The face tracking module is configured to track a face based on a feature quantity of the face pattern and a result of the evaluation by the face determining module.

EP 2 682 895 A2

**Description**

TECHNICAL FIELD

Embodiments described herein relate generally to a video display apparatus and a video display method.

BACKGROUND

Hitherto, a stereoscopically-viewable area of a naked-eye stereoscopic video display apparatus with respect to a viewer and speaker directions of an audio apparatus with respect to a listener have been adjusted using position information of the viewer/listener.

To acquire such position information of the viewer/listener, feature points of a face of the viewer/listener in an image captured by a camera are detected, and a distance between the feature points (for example, a face width, an interval between the eyes, or the like) is calculated. Then, Actual position coordinates of the viewer/listener are calculated based on the calculated distance between the feature points in the captured image and an average distance between the feature points prepared in advance, using a perspective projection method of a pinhole camera model.

Incidentally, apparatus capable of detecting a user's face have been spreading.

JP 2005-92262 A describes that a background image without any person is captured in advance, a person is detected based on a difference between the background image and a newly captured image, and a face portion is estimated by edge detection and finally detected by skin color detection. However, it is difficult to estimate a face portion by the edge detection because the estimation is influenced by the resolution of an image captured by a camera and noise in the captured image. If the accuracy of detection of a face portion is low, the accuracy of the face detection by the skin color detection also becomes low.

JP 2004-246618 A, which is the publication of a Japanese patent application filed by the same applicant as this application, describes a face detecting method. In this technique, various face images are used as sample images, and sample probability images are generated from the sample images. A face is detected by comparing an image captured by a camera with the sample probability images. (In the following description, the sample probability images may be referred to as a "face dictionary," and this detection method may be referred to as a "face dictionary face detecting method".) With this detection method, faces can be detected stably. There may be, however, a case where a portion other than a face is detected. For example, a photograph of a face hung on a wall, a pattern that is similar to a face, etc. may be detected erroneously. No method for eliminating such an erroneously detected portion is available.

Where only a face feature quantity is used, face tracking may fail temporarily. This is because matching requires a front face; it is difficult to deal with faces that are orientated in all directions in acquired images because an enormous amount of calculation is necessary. If face tracking fails, it is necessary to perform face detection again. However, in apparatus in which viewers are discriminated from each other by assigning identifiers to the respective viewers every time face detection is performed, an event that face tracking fails due to a temporary face motion to necessitate assignment of new identifiers causes much inconvenience.

More robust face detection or face tracking techniques which can cope with a variation in environment or a face motion are desired. However, no means for satisfying such a desire has been known.

SUMMARY

The invention provides a more robust face detection technique which can cope with a variation in environment and/or a face motion.

According to one embodiment, a video display apparatus includes an image acquiring module, a face-dictionary face detector, a face determining module and a face tracking module. The image acquiring module is configured to acquire an image captured by an imaging device. The face-dictionary face detector is configured to search the captured image acquired by the image acquiring module for a portion that coincides with a face pattern in a human face dictionary. The face determining module is configured to evaluate the portion based on the captured image and a background image acquired in advance. The face tracking module is configured to track a face based on a feature quantity of the face pattern and a result of the evaluation by the face determining module.

BRIEF DESCRIPTION OF THE DRAWINGS

Fig. 1 is a perspective appearance view showing one example of a digital TV receiver according to an embodiment;
Fig. 2 is a block diagram showing a signal processing system of the digital TV receiver;
Fig. 3 is a functional block diagram of a face-position-coordinate acquiring module according to the embodiment;
Fig. 4 illustrates an example of a camera image and face coordinates in the embodiment;
Fig. 5 is a flowchart of a face detection/face tracking process according to the embodiment;
Fig. 6 is a flowchart of a process for acquiring a background/reference image according to the embodiment; and
Fig. 7 is a flowchart of a face detection process according to the embodiment.

DETAILED DESCRIPTION

According to one embodiment, a video display apparatus includes an image acquiring module, a face-dictionary face detector, a face determining module and a face tracking module. The image acquiring module is configured to acquire an image captured by an imaging device. The face-dictionary face detector is configured to search the captured image acquired by the image acquiring module for a portion that coincides with a face pattern in a human face dictionary. The face determining module is configured to evaluate the portion based on the captured image and a background image acquired in advance. The face tracking module is configured to track a face based on a feature quantity of the face pattern and a result of the evaluation by the face determining module.

Embodiments will be described in detail below with reference to the accompanying drawings.

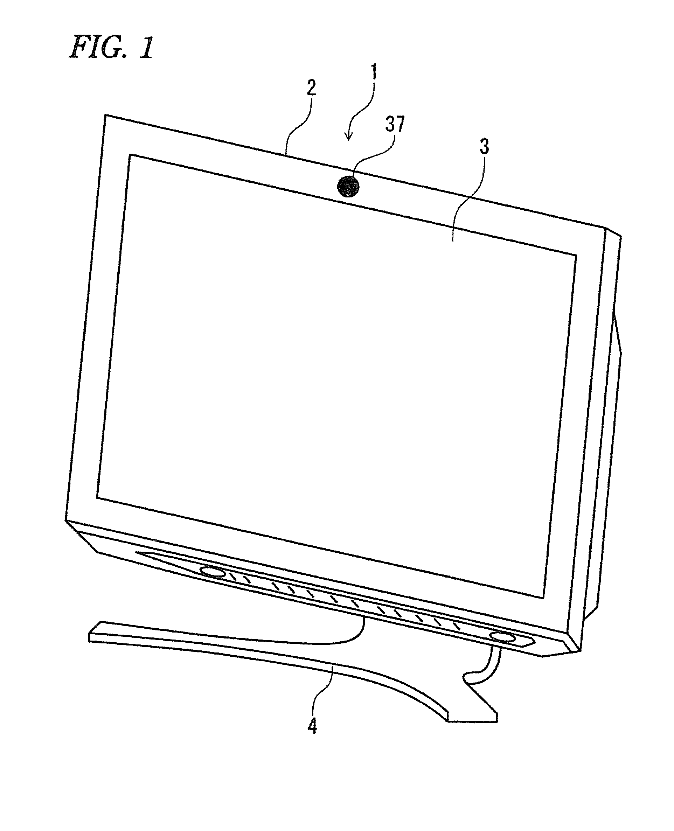

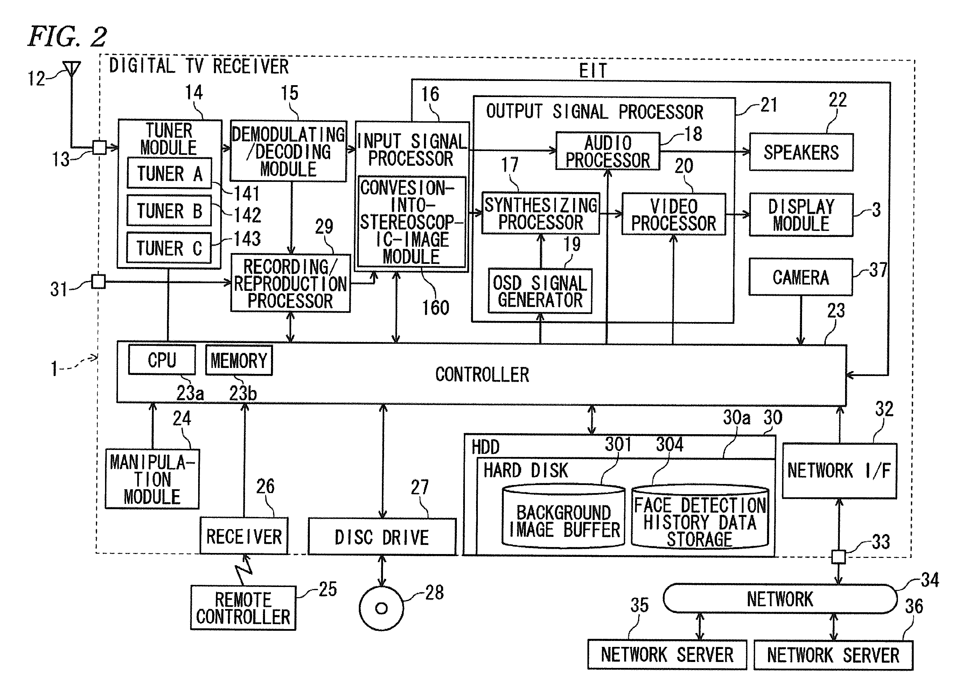

Fig. 1 is a perspective view showing an appearance of a digital TV receiver 1 which is an example of an electronic device according to one embodiment. As shown in Fig. 1, when viewed from the front side (in a planar view from the front side), the digital TV receiver 1 has a rectangular appearance. The digital TV receiver 1 includes a casing 2 and a display module 3 such as an LCD (liquid crystal display) panel. The display module 3 receives a video signal from a video processor 20 (see Fig. 2; which will be described later) and displays video such as a still image or a moving image. The casing 2 is supported by a support member 4.

Fig. 2 is a block diagram showing a signal processing system of the digital TV receiver 1. The digital TV receiver 1 serves as a stereoscopic image output apparatus. The digital TV receiver 1 can not only display video based on an ordinary planar (2D) display video signal but also display video based on a stereoscopic (3D) display video signal. Also, the digital TV receiver 1 enables users to view stereoscopic video with naked eyes.

As shown in Fig. 2, in the digital TV receiver 1, a broadcast signal on a desired channel can be selected by supplying digital TV broadcast signals received by an antenna 12 to a tuner module 14 (receiver) via an input terminal 13. The broadcast signal selected by the tuner module 14 is supplied to a demodulating/decoding module 15. The demodulating/decoding module 15 restores a digital video signal and audio signal etc., which are output to an input signal processor 16. In this embodiment, it is assumed that the digital TV receiver 1 includes three tuners (receivers configured to receive digital TV broadcast signals), that is, a tuner A 141 and a tuner B 142 (two tuners for reception of ground-wave digital broadcasts) and a tuner C 143 (one tuner for reception of BS/CS digital broadcasts).

The input signal processor 16 performs prescribed digital signal processing on each of the digital video signal and audio signal, which are supplied from the demodulating/decoding module 15.

The input signal processor 16 has a conversion-into-stereoscopic-image module 160 which performs stereoscopic image conversion processing of converting a video signal (input video signal) for ordinary planar (2D) display into a video signal for stereoscopic (3D) display.

The input signal processor 16 separates an EIT (event information table) being a table, in which event information such as a program name, persons who appear, and a start time are described, from the broadcast signal selected by the tuner module 14. The EIT separated by the input signal processor 16 is input to a controller 23 as program table data. The EIT contains information (event information) relating to a program such as a broadcast date and time and broadcast details including program title information, genre information, and information indicating persons who appear.

The input signal processor 16 outputs a digital video signal and an audio signal to a synthesizing processor 17 and an audio processor 18, respectively. The synthesizing processor 17 superimposes an OSD (On-Screen Display) signal (superimposition video signal) such as subtitles, a GUI (Graphical User Interface), or the like generated by an OSD signal generator 19 on the digital video signal supplied from the input signal processor 16, and outputs a resulting signal. In this example, the synthesizing processor 17 superimposes the OSD signal supplied from the OSD signal generator 19 as it is on the digital video signal supplied from the input signal processor 16, and outputs a resulting signal.

In the digital TV receiver 1, the digital video signal output from the synthesizing processor 17 is supplied to the video processor 20. The video processor 20 converts the received digital video signal into an analog video signal having such a format as to be displayable by the display module 3 serving as a video output module. The analog video signal output from the video processor 20 is supplied to the display module 3 and used for video output there.

The audio processor 18 converts the received audio signal into analog audio signals having such a format as to be reproducible by downstream speakers 22. The analog audio signals output from the audio processor 18 are supplied to the speakers 22 and used for sound reproduction there.

As shown in Fig. 2, the synthesizing processor 17, the audio processor 18, the OSD signal generator 19, and the video processor 20 constitute an output signal processor 21.

As shown in Fig. 1, the digital TV receiver 1 includes a camera 37 (an example of an imaging device) in the vicinity of the display module 3. The camera 37 is disposed at such a position as to be able to capture a face of a user who is opposed to the digital TV receiver 1.

In the digital TV receiver 1, all operations including the above-described various receiving operations are controlled by the controller 23 in a unified manner. The controller 23 incorporates a CPU (Central Processing Unit) 23a. The controller 23 controls individual components in such a manner that the content of a manipulation indicated by manipulation information received from a manipulation module 24 which is a manipulation device provided in the main body of the digital TV receiver 1 or manipulation information transmitted from a remote controller 25 (another example of manipulation device) and received by a receiver 26.

The controller 23 incorporates a memory 23b, which mainly includes a ROM (read-only memory) storing control programs to be executed by the CPU 23a, a RAM (random access memory) for providing a work area for the CPU 23a, and a nonvolatile memory for storing various kinds of setting information, control information, and manipulation information supplied from the manipulation module 24 and/or the remote controller 25, and other information.

A disc drive 27 is connected to the controller 23. An optical disc 28 such as a DVD (digital versatile disc) is to be inserted into the disc drive 27 in a detachable manner. The disc drive 27 has functions of recording and reproducing digital data on and from the inserted optical disc 28.

The controller 23 may perform, according to a manipulation made by a viewer on the manipulation module 24 and/or the remote controller 25, controls so that a digital video signal and a audio signal generated by the demodulating/decoding module 15 are coded and converted by a recording/reproduction processor 29 into signals having a predetermined recording format, which are supplied to the disc drive 27 and recorded on the optical disc 28.

The controller 23 may perform, according to a manipulation made by a viewer on the manipulation module 24 and/or the remote controller 25, controls so that a digital video signal and a audio signal are read from the optical disc 28 by the disc drive 27 and decoded by the recording/reproduction processor 29, and resulting signals are supplied to the input signal processor 16 so as to be used for video display and audio reproduction (as described above).

An HDD (hard disk drive) 30 is connected to the controller 23. The controller 23 may perform, according to a manipulation made by a viewer on the manipulation module 24 and/or the remote controller 25, controls so that a digital video signal and a audio signal generated by the demodulating/decoding module 15 are coded and converted by the recording/reproduction processor 29 into signals having a predetermined recording format, which are supplied to the HDD 30 and recorded on a hard disk 30a.

Furthermore, the controller 23 may perform, according to a manipulation made by a viewer on the manipulation module 24 and/or the remote controller 25, controls so that a digital video signal and an audio signal are read from the hard disk 30a by the HDD 30 and decoded by the recording/reproduction processor 29, and resulting signals are supplied to the input signal processor 16 so as to be used for video display and audio reproduction (as described above).

By storing various kinds of data in the hard disk 30a, the HDD 30 functions as a background image buffer 301 and a face detection history data storage 304. The face detection history data storage 304, which functions as a human database (DB), stores distances between feature points (for example, a face width which will be described later) and face feature point coordinates (for example, coordinate information of a face contour which will be described later) in such a manner that they are associated with respective viewer IDs.

The digital TV receiver 1 has an input terminal 31. The input terminal 31, which is a LAN terminal, a USB terminal, an HDMI terminal, or the like, serves for direct input of a digital video signal and an audio signal from outside the digital TV receiver 1. A digital video signal and an audio signal that are input through the input terminal 31 may be supplied to the input signal processor 16 via the recording/reproduction processor 29 and used for video display and audio reproduction (as described above), under the control of the controller 23.

Also, a digital video signal and an audio signal that are input through the input terminal 31 may be supplied to the disc drive 27 or the HDD 30 via the recording/reproduction processor 29 and recorded in the optical disc 28 or the hard disk 30a, under the control of the controller 23.

The controller 23 also performs, according to viewer's manipulation on the manipulation module 24 or the remote controller 25, controls so that a digital video signal and an audio signal recorded on the optical disk 28 are transferred to and recorded on the hard disk 30a or a digital video signal and an audio signal recorded on the hard disk 30a are transferred to and recorded on the optical disk 28 by the disc drive 27 and the HDD 30.

A network interface 32 is connected to the controller 23. The network interface 32 is connected to an external network 34 through an input/output terminal 33. Network servers 35 and 36 for providing various services using a communication function via the network 34 are connected to the network 34. Therefore, the controller 23 can use a service provided by a desired one of the network servers 35 and 36 by accessing it and performing an information communication with it through the network interface 32, the input/output terminal 33, and the network 34. An SD memory card or an USB device may be connected to the network interface 32 though the input/output terminal 33.

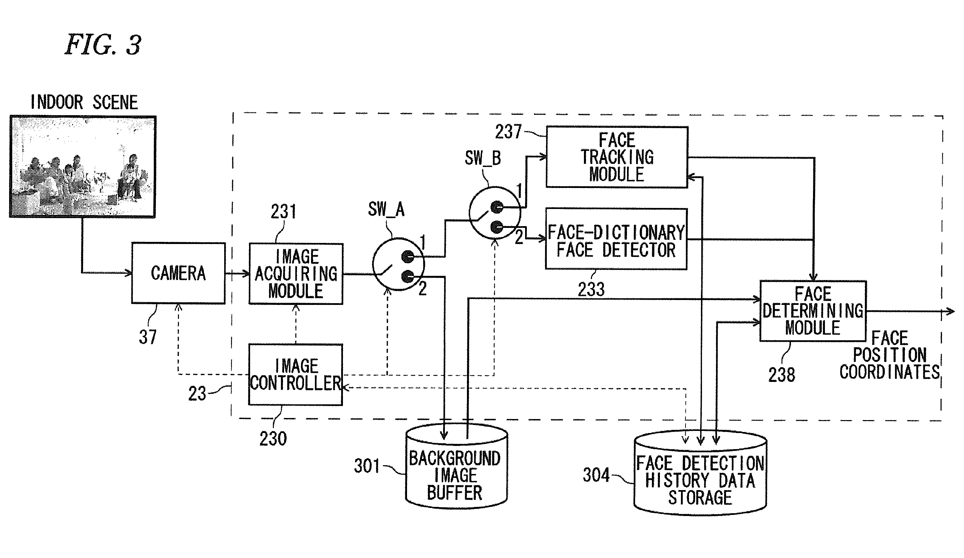

Fig. 3 is a functional block diagram of a face-position-coordinate acquiring module that generates face position coordinates based on a camera image. The face-position-coordinate acquiring module is a function of the controller 23, for example, implemented by the CPU 23a and the memory 23b. The face-position-coordinate acquiring module may be provided in an audio apparatus such as a camera-equipped TV receiver, a surveillance camera, or the like and acquires face position coordinates in a camera image.

This embodiment is intended to solve, by additionally using a difference between a camera image and a background/reference image, a disadvantage of JP 2004-246618 A that a variety of faces (in orientation, illumination, etc.) cannot be dealt with.

The controller 23 functions as a position coordinates detecting device by having the CPU 23a operate according to a control program. As shown in Fig. 3, the controller 23 includes an image controller 230, an image acquiring module 231, a face-dictionary face detector 233, a face tracking module 237, and a face determining module 238 that detects position coordinates. Functions of the respective modules will be described below.

The image acquiring module 231 acquires a captured image from video captured by the camera 37. In the digital TV receiver 1, the image captured by the camera 37 is supplied to the face tracking module 237 and the face-dictionary face detector 233 under the control of the image controller 230.

The camera 37 captures an indoor scene. Then, a camera image captured by the camera 37 is input to the image acquiring module 231. The image acquiring module 231 processes the camera image to facilitate discrimination of a face. A background/reference image is stored in the background image buffer 301. The face-dictionary face detector 233 searches for a portion that coincides with any of face patterns in a face dictionary while scanning the camera image. A typical operation of the face-dictionary face detector 233 is described in JP 2004-246618 A. The face tracking module 237 tracks a face portion in a prescribed range around the face-detected position based on feature quantities of the face (coordinates of the eyes, nose, and mouth). The face determining module 238 evaluates a difference between the camera image and a background/reference image, uses an evaluation result to improve the face detection accuracy and enhance the tracking performance, and outputs face position coordinates.

Specific description will be given with reference to Fig. 3. In Fig. 3, solid-line arrows indicate data flows, and broken-line arrows indicate control relationships.

Face detection is first started upon activation of the digital TV receiver 1. Alternatively, the face detection may be started upon activation of the position-coordinate-detection device. The image acquiring module 231 acquires image data from the camera 37 under the control of the image controller 230, and thereafter, a switch SW_A is switched to the "1" side. Face position coordinates from the present time to a time that was a prescribed time before the present time are stored in the face detection history data storage 304. Since it is found by referring to data stored in the face detection history data storage 304 that no face history data exists there, a switch SW_B is switched to the "2" side, and the face-dictionary face detector 233 performs face detection. The face-dictionary face detector 233 may detect a face correctly or erroneously. That is, face position coordinates obtained by the face-dictionary face detector 233 may be face coordinates of a viewer face or face coordinates that have been detected erroneously because of presence of a wall pattern, a photograph, or the like. The face determining module 238 eliminates erroneously detected face coordinates using the reference image stored in the background image buffer 301.

The background/reference image(s) are acquired by the following two methods. The first method detects that no person exists and utilizing an image captured by the camera 37 at that time. This kind of image will be referred to as a "background image." Absence of a person is detected when differences among images of several consecutive frames are very small. A background image is captured every prescribed time, and a background image captured in a time slot that is close to a time of the face detection is used by associating each background image with its capturing time. The second method acquires an image every frame or every several frames. This kind of image will be referred to as a "reference image." When an acquired background or reference image is stored in the background image buffer 301, the switch SW_A (see Fig. 3) is switched to the "2" side.

The face determining module 238 determines as to whether or not detected face coordinates are correct ones. The face determining module 238 compares a face area acquired from face coordinates and a face width which are obtained from the face-dictionary face detector 233 with the same area in a background image, using the background image obtained by the first method and stored in the background image buffer 301. If a difference between the face areas is smaller than a predetermined value, the face determining module 238 determines that a background pattern was detected erroneously as a face. If the difference is equal to or larger than the predetermined value, the face determining module 238 determines that a face was detected correctly. The comparing of the face areas may be made, for example, by calculating differences between pixel values of pixels at the same positions in the face areas or by comparing statistical data (histograms, maximum values, minimum values, average values, or the like) in the face areas. "A difference that is smaller than the predetermined value" is a difference caused only by camera noise and/or light and enables the face determining module 238 to determine that a captured object(s) are a still object(s) in the image. "A difference(s) that is equal to or larger than the predetermined value" is a difference caused by a motion of a human (for example, a blink and/or vibration due to a breath) that occurs even if he or she is still, and enables the face determining module 238 to determine that a captured object(s) include a human(s). The threshold value (predetermined value) is determined according to the image acquisition method, an S/N ratio of a captured image, the optical characteristics of the camera 37, etc.

The face tracking module 237 is activated upon detection of a face. After the image acquiring module 231 acquires image data from the camera 37 under the control of the image controller 230, the switch SW_A is switched to the "1" side, and the data stored in the face detection history data storage 304 are referred to. Since face history data exists there, the switch SW_B is switched to the "1" side, and the face tracking module 237 performs face tracking. If the face tracking has succeeded, the face tracking module 237 supplies face coordinates and a face width to the face determining module 238. If the face tracking has failed, the face tracking module 237 notifies the face determining module 238 of that fact. In this case, the face determining module 238 supplements the face tracking using a background/reference image(s) stored in the background image buffer 301.

Description will be given on the case where a background image has been acquired by the first method. When the face tracking has failed, if a difference between a currently captured image and the background image is larger than the predetermined value, it is determined that the face tracking has failed temporarily, and face position coordinates of an image captured at an immediately preceding time when the face tracking succeeded are used. The difference, which is larger than the predetermined value, is a difference that enable discrimination between a background image (without a human) and an image including a human.

Next, description will be given on the case where a reference image has been acquired by the second method. When the face tracking has failed, a difference between a currently captured image and an image captured at an immediately preceding time when the face tracking succeeded is calculated, and a portion where the difference is larger than the predetermined value is detected. If face coordinates obtained at the immediately preceding time when the face tracking succeeded are included in the detected portion, it is determined that the face tracking has failed temporarily, and the face position coordinates of the image captured at the immediately preceding time when the face tracking succeeded are used. The portion where the difference is larger than the predetermined value should be a portion where a human moves. A portion where the difference is equal to or smaller than the predetermined value is a portion that can be determined to be a background portion. The difference may be calculated by comparing pixel values of pixels at the same position in areas or comparing statistical data values (histograms, maximum values, minimum values, average values, or the like) in the areas.

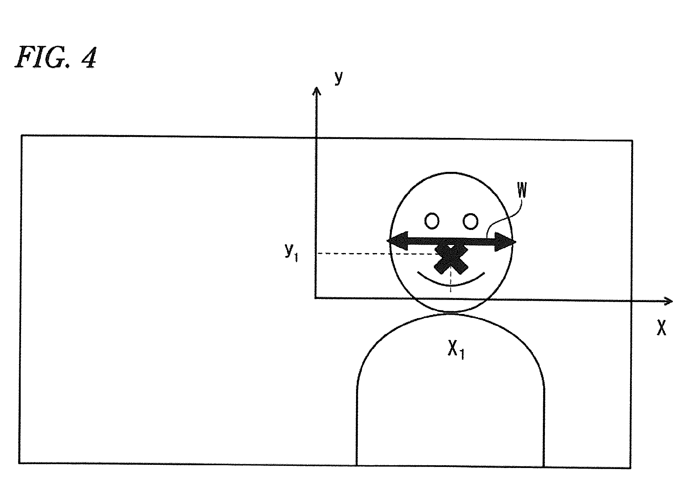

A human position can be calculated from the face position coordinates determined by the face determining module 238 using the known perspective projection conversion of a pinhole camera model. As shown in Fig. 4, values that are necessary in this conversion are coordinates (x1, y1) (unit: pixel) of the center of gravity of a face in a camera image and a face feature quantity (in the example of Fig. 4, a face width w (pixels)). A viewer position (X, Y, Z) (world coordinates; unit: mm) can be calculated based on the coordinates in the captured image using a face average width $W_A$ and the focal length f of the camera 37 in the following manner:

$$X = (x_1 \times W_A)/w \text{ (mm)}$$

$$Y = (y_1 \times W_A)/w \text{ (mm)}$$

$$Z = (f \times W_A)/w \text{ (mm)}$$

For example, an optimum viewing range of a glassless TV receiver or an optimum sound field of an audio apparatus can be set using an actual distance.

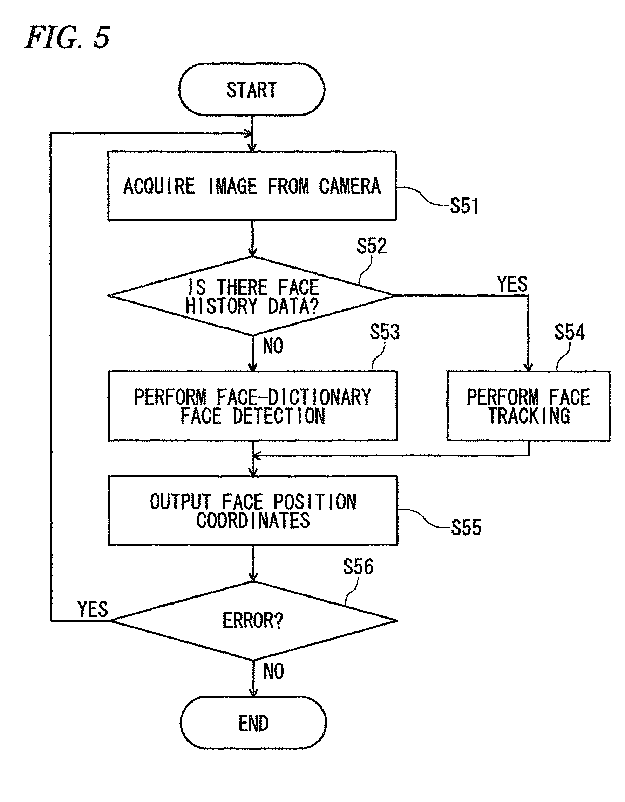

The above operations will be described with reference to flowcharts in which the image controller 230 mainly performs processes. At first, Fig. 5 is a flowchart of a face detection/face tracking process according to this embodiment.

Step S51: An image is acquired from the camera 37.

Step S52: It is determined as to whether or not face history data exists in the face detection history data storage 304.

Step S53: If the determination result at step S52 is negative, the face-dictionary face detector 233 performs face detection at step S53.

Step S54: If the determination result at step S52 is affirmative, the face tracking module 237 performs face tracking at step S54 by.

Step S55: The face determining module 238 eliminates an erroneously detected face or determines as to whether or not the face tracking has failed temporarily, based on (i) a background/reference image and (ii) face position coordinates and a face width that are received from the face-dictionary face detector 233 or the face tracking module 237, and outputs face position coordinates and a face width.

Step S56: The process is terminated if some error has occurred. If not, the process returns to step S51.

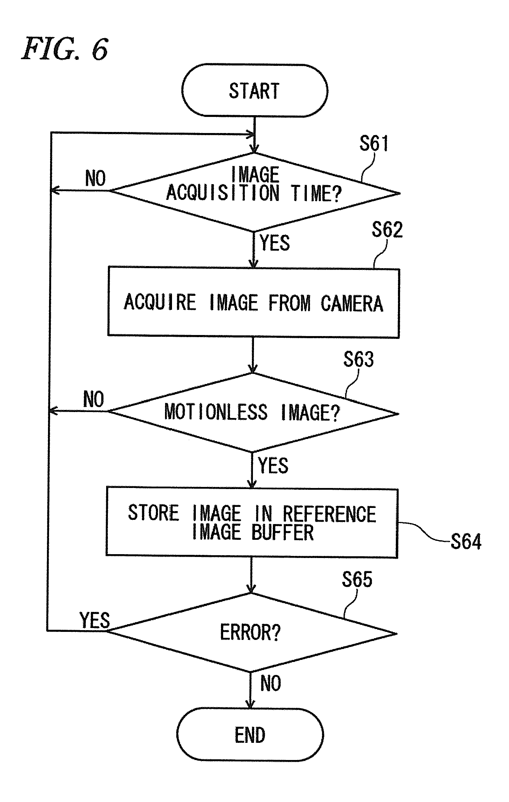

Fig. 6 is a flowchart of a process for acquiring a background/reference image according to this embodiment.

Step S61: It is determined as to whether or not an image acquisition time comes. If the determination result is negative, step S61 is repeated.

Step S62: An image is acquired from the camera 37.

Step S63: If a background image should be acquired by the first method, it is determined as to whether or not the image is motionless. If the determination result is negative, the process returns to step S61. If a reference image should be acquired by the second method, the process moves to step S64 with skipping step S63.

Step S64: The image is stored in the background image buffer 301.

Step S65: The process is terminated if some error has occurred. If not, the process returns to step S61.

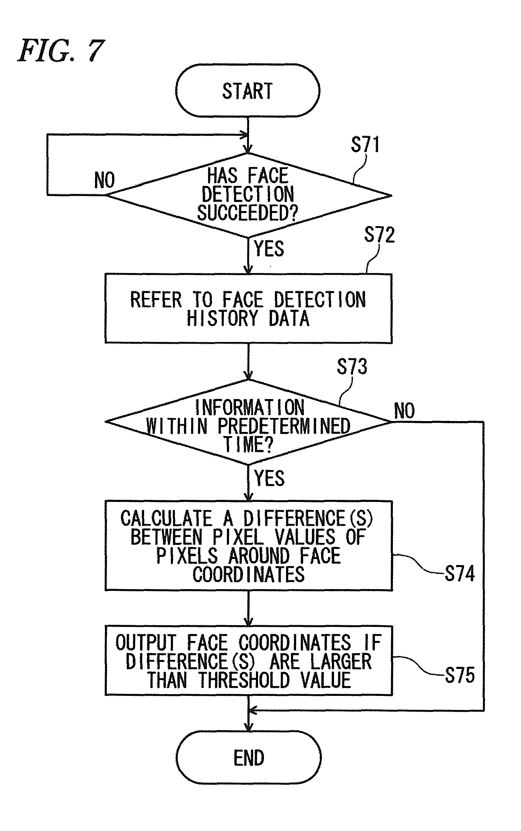

Fig. 7 is a flowchart of a face detection process according to this embodiment.

Step S71: The face-dictionary face detector 233 determines as to whether or not face detection has succeeded. If the determination result is negative, step S71 is repeated.

Step S72: The data stored in the face detection history data storage 304 are referred to.

Step S73: It is determined as to whether or not data within a predetermined time exists. The process is terminated if the determination result is negative.

Step S74: Differences between portions, around face coordinates, of a captured image and a background image stored in the background image buffer 301 are calculated.

Step S75: The face coordinates are output if the differences are larger than the threshold value.

The embodiment provides an advantage that it enables more robust face tracking and face detection than the prior art when it is combined with the technique described in JP 2004-246618 A.

The embodiment is summarized as follows. In a camera-equipped TV receiver, the face detection and the face tracking can be performed robustly by using face detection in which differences from a reference image (or background image) are calculated in addition to a face detecting function of detecting a viewer face from a camera image. A background image that was captured by the camera when no person existed or a reference image that was captured by the camera at a preceding time is used as a background/reference image.

(1. Enhancement of Face Tracking) If a viewer face is lost in the face tracking, it is determined as to whether or not there is a difference from a background image. If the determination result is affirmative, a face position obtained by the face tracking module before the viewer face is lost are used.

(2. Increase of Accuracy of Face Detection) If a face has been detected by a face detector but a difference from a background image is approximately equal to zero, it is determined that the detected face is an erroneous one, and corresponding face position coordinates are not used.

A camera image with minimum inter-frame differences is stored in the buffer as the background image, and a camera image is stored in the buffer as a reference image every frame or every several frames. The background image is updated every several hours, and a background image in the same time slot as a current image is used.

The above-described embodiment enables the face tracking, which is robust to a face image variation due to a variation in illumination, face orientation, or the like. Furthermore, the probability of erroneous detection (that is, detection of an object other than a face) can be reduced.

The invention is not limited to the above embodiment, and can be practiced in such a manner that constituent elements are modified in various manners without departing from the spirit and scope of the invention.

Also, various inventive concepts may be conceived by properly combining plural constituent elements disclosed in the embodiment. For example, several ones of the constituent elements of the embodiment may be omitted. Furthermore, constituent elements of different embodiments may be combined appropriately.

**Claims**

1. A video display apparatus comprising:

   an image acquiring module configured to acquire an image captured by an imaging device;
   a face-dictionary face detector configured to search the captured image acquired by the image acquiring module for a portion that coincides with a face pattern in a human face dictionary;
   a face determining module configured to evaluate the portion based on the captured image and a background image acquired in advance; and
   a face tracking module configured to track a face based on a feature quantity of the face pattern and a result of the evaluation by the face determining module.

2. The apparatus of claim 1, further comprising:

   a background image buffer configured to acquire, as the background image, the captured image and buffer the acquired background image.

3. The apparatus of claim 1, further comprising:

   a storage configured to store face detection history data relating to the human face dictionary, which is used to search for the portion.

4. The apparatus of claim 2, the background image is acquired in frame units of the captured image and buffered.

5. A video display method comprising:

   acquiring a captured image;
   searching the captured and acquired image for a portion that coincides with a face pattern in a human face dictionary;

evaluating the portion based on the captured image and a background image acquired in advance; and

tracking a face based on a feature quantity of the face pattern and a result of the evaluating.

FIG. 1

*FIG. 2*

DIGITAL TV RECEIVER

EIT

**TUNER MODULE** 14
- TUNER A — 141
- TUNER B — 142
- TUNER C — 143

12

13

31

**DEMODULATING /DECODING MODULE** 15

**RECORDING/ REPRODUCTION PROCESSOR** 29

**INPUT SIGNAL PROCESSOR** 16

**CONVESION- INTO- STEREOSCOP- IC-IMAGE MODULE** 160

**OUTPUT SIGNAL PROCESSOR**

**AUDIO PROCESSOR** 21 / 18

**SYNTHESIZING PROCESSOR** 17

**VIDEO PROCESSOR** 20

**OSD SIGNAL GENERATOR** 19

**SPEAKERS** 22

**DISPLAY MODULE** 3

**CAMERA** 37

23

1

**CONTROLLER**
- CPU 23a
- MEMORY 23b

**MANIPULA- TION MODULE** 24

**RECEIVER** 26

**REMOTE CONTROLLER** 25

**DISC DRIVE** 27

**HDD** 30
- **HARD DISK** 30a
  - **BACKGROUND IMAGE BUFFER** 301
  - **FACE DETECTION HISTORY DATA STORAGE** 304

**NETWORK I/F** 32

33

**NETWORK** 34 / 36

**NETWORK SERVER** 35

**NETWORK SERVER** 36

EP 2 682 895 A2

10

*FIG. 3*

INDOOR SCENE

CAMERA — 37

IMAGE ACQUIRING MODULE — 231

IMAGE CONTROLLER — 23

230

SW_A

SW_B

237 — FACE TRACKING MODULE

FACE-DICTIONARY FACE DETECTOR — 233

FACE DETERMINING MODULE — 238

FACE POSITION COORDINATES

301 — BACKGROUND IMAGE BUFFER

304 — FACE DETECTION HISTORY DATA STORAGE

EP 2 682 895 A2

FIG. 4

*FIG. 5*

START

ACQUIRE IMAGE FROM CAMERA —S51

IS THERE FACE HISTORY DATA? — S52

NO

PERFORM FACE-DICTIONARY FACE DETECTION — S53

YES

PERFORM FACE TRACKING — S54

OUTPUT FACE POSITION COORDINATES —S55

ERROR? — S56

YES

NO

END

*FIG. 6*

*FIG. 7*

START

HAS FACE DETECTION SUCCEEDED? — S71

NO

YES

REFER TO FACE DETECTION HISTORY DATA — S72

INFORMATION WITHIN PREDETERMINED TIME? — S73

NO

YES

CALCULATE A DIFFERENCE(S) BETWEEN PIXEL VALUES OF PIXELS AROUND FACE COORDINATES — S74

OUTPUT FACE COORDINATES IF DIFFERENCE(S) ARE LARGER THAN THRESHOLD VALUE — S75

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005092262 A

- JP 2004246618 A